Europäisches Patentamt

European Patent Office

Office européen des brevets

(19)

(11) Publication number: **0 153 196**
**B1**

# EUROPEAN PATENT SPECIFICATION

(12)

(45) Date of publication of patent specification: **21.09.88**

(51) Int. Cl.⁴: **B 60 K 17/28**

(21) Application number: **85301144.3**

(22) Date of filing: **20.02.85**

(54) Transmission system for motor vehicles having pto-shafts.

(30) Priority: **20.02.84 JP 23557/84 u**

(43) Date of publication of application:
**28.08.85 Bulletin 85/35**

(45) Publication of the grant of the patent:
**21.09.88 Bulletin 88/38**

(84) Designated Contracting States:
**FR GB**

(56) References cited:
**DE-A-3 125 122**
**GB-A- 909 159**
**GB-A-2 013 595**
**GB-A-2 053 386**
**US-A-4 103 566**

(73) Proprietor: **KANZAKI KOKYUKOKI MFG. CO.,
LTD.
341 Inadera
Amagasaki (JP)**

(72) Inventor: **Irikura, Koji
28-101, 30-ban Kawarabayashi-cho
Nishinomiya (JP)**
Inventor: **Fujisaki, Koichiro
17-10, Nishiyama-cho
Ashiya (JP)**
Inventor: **Hikishima, Keisaku
3-13-30, Tsurukabuto-cho
Nada-ku Kobe (JP)**

(74) Representative: **Valentine, Francis Anthony
Brinsley et al
REDDIE & GROSE 16 Theobalds Road
London WC1X 8PL (GB)**

Courier Press, Leamington Spa, England.

## Description

This invention relates to transmission systems for motor vehicles for use, for example, in earth-moving, mowing, reaping or goods loading operations.

More particularly, the present invention relates to a transmission system for a motor vehicle, wherein the driven wheels e.g. the left and right rear wheels, are driven by the engine through a transmission path including, before a differential gearing for the driven wheels, a hydrostatic transmission and change speed gearing which are connected in series with each other, and wherein there is provided a front PTO shaft for driving mid-mounted auxiliary equipment and a rear PTO shaft for driving auxiliary equipment drawn by the vehicle.

A transmission system which transmits only the vehicle driving power can be constructed with ease so that components are arranged in a vertically compact manner and housed in a transmission case which occupies a relatively small longitudinal length of a vehicle. An example of a transmission of this type is disclosed in U.S. Patent no. 4,103,566.

A transmission which also transmits power for driving auxiliary equipment can hardly be constructed to have such a compact arrangement of components. In working vehicles such as tractors, a longitudinally lengthy transmission case has thus far been employed. Typical examples are shown in U.S. Patent Nos. 4,304,141 and 4,373,597. In the tractors disclosed in these U.S. patents, the transmission case is divided into front and rear casings which are fixedly connected with each other. On the front of the transmission case is fixed a hydrostatic transmission for varying the speed and direction of the vehicle. In the front casing separate reduction gearing is located for step variation of the speed of the vehicle and step variation of the drive speed of the working implements. The former reduction gearing is disposed within the rear half of the front casing and transmits power to differential gearing arranged in the rear casing. The latter reduction gearing, which is drivably connected with a pump shaft of the hydrostatic transmission, is disposed within the front half of the front casing and transmits power through the rear casing to a rear PTO (power take-off) shaft which extends rearwardly from the rear casing to drive a working implement towed by the vehicle. In the transmission system disclosed in U.S. Patent No. 4,304,141, a front PTO shaft for driving a mid mounted working implement is further provided which extends forwardly from a separate case fixedly arranged on the bottom of the front casing. Such a front PTO shaft is supplied with power from PTO reduction gearing disposed within the front half of the front casing along with that used to drive the vehicle. Thus, U.S. 4,304,141 discloses a power transmission system for a motor vehicle having a hydrostatic transmission, mounted on the front of a transmission case and consisting of a hydraulic pump and a hydraulic motor located below the hydraulic pump, the shaft of the hydraulic motor is drivably connected to a rear wheel drive assembly by means of a first gear train and first change speed gearing, the pump shaft of the hydraulic pump is extended rearwardly and drivably connectable, by means of a second gear train and second change speed gearing, to a rearwardly extending rear power take-off shaft and, by means of a third gear train, to a forwardly extending front power take-off shaft.

The PTO system shown in U.S. 4,304,141 requires a transmission case which has a large length in the longitudinal direction of vehicle and, therefore, is excessively heavy. Such a transmission case will also make assembling the vehicle difficult. The separate case on the bottom of the front transmission case employed in the transmission system according to U.S. Patent No. 4,304,141 for providing a front PTO shaft at a low level will adversely affect the clearance between the transmission case and the ground. The separate case will need to be mounted higher accordingly.

British Patent No. 909,159 does disclose a transmission system in which components are arranged in a compact way so as to reduce the length of the transmission case. At the front of the transmission system, between primary and secondary shafts, is located a change speed mechanism using a pair of pulleys each having a variable diameter and an endless belt entrained by the pulleys. A change speed gearing which is supplied with power from the secondary shaft, transmitting power to a differential gearing for the vehicle driving wheels, and arranged in an upper half of the space in which the transmission mechanism is housed, whereas a PTO clutch mechanism which is supplied with power from the primary shaft and selectively drives one or both of the co-axially disposed front PTO and rear PTO shafts is arranged in the lower half of the space. The differential gearing is arranged behind the change speed gearing and PTO clutch mechanism referred to above. It is thus considered that, if a single transmission case were employed for housing all the components of the transmission mechanism, then a space would be produced within the case at the rear in which only the differential gearing would be located. The co-axial arrangement of front PTO shaft and rear PTO shaft is not desirable, because mid-mounted auxiliary equipment is slung below the vehicle and hence power take-off must be at a lower level than that required by auxiliary machinery drawn by the vehicle. Hence it is preferable to dispose a rear PTO shaft at a level higher than that of a front PTO shaft for a convenient transmission of power to such working implements.

A transmission system according to the present invention is characterised in that the rear wheel drive assembly is mounted in a lower portion of the transmission case, and the first gear train and first change speed gearing are located below the level of the hydraulic motor shaft, in front of the rear wheel drive assembly; the second gear train, second speed change gearing and rear power take-off shaft are located in an upper portion of the transmission case, above the rear wheel assembly; and the third gear train and second power take-off shaft are located forwardly of the rear wheel drive assembly, to one side of the first change speed gearing.

An embodiment of the present invention will now be described, by way of example, with reference to the accompanying drawings, in which:

Fig. 1 is a schematic side view, partially cut away, of a self-propelled working vehicle in which an embodiment of the present invention is employed;

Fig. 2 is a schematic plan view showing the arrangement of various components of the vehicle shown in Fig. 1;

Fig. 3 is a sectional side view, partially cut away of a part of the vehicle shown in Fig.1;

Fig. 4 is a partial sectional view along the line IV-IV of Fig. 3;

Fig. 5 is a sectional plan view of a part of the vehicle shown in Fig. 1;

Fig. 6 is a sectional plan view of a further part of the vehicle shown in Fig. 1;

Fig. 7 is a partial sectional view along the line VII-VII of Fig. 3; and

Fig. 8a and 8b are enlarged sectional side views of a part of Fig. 3 showing the clutch shaft engaged with first and second gear, and first gear only, respectively to illustrate the operation of PTO clutch mechanism.

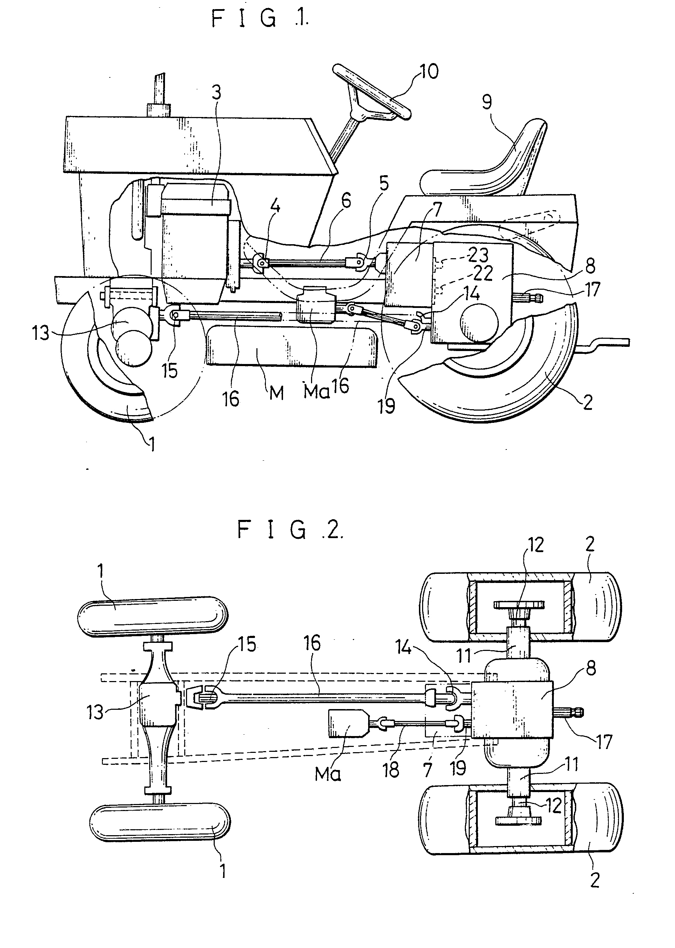

Referring to Figs. 1 and 2, the present invention is embodied in a tractor of relatively small size which is equipped with a midmounted mower M slung between front wheels 1 and rear wheels 2, below the vehicle frame. An engine 3 is mounted on the front of the vehicle. A transmission mechanism, to which power is fed from the engine 3 through a transmission shaft 6 having universal joints 4 and 5 at both ends, is arranged at the rear of the vehicle and between the left and right rear wheels 2. This transmission mechanism comprises a hydrostatic transmission 7 located in front of the transmission mechanism and a transmission housed in a transmission case 8 disposed at the rear end of the transmission mechanism. Power is transmitted from transmission shaft 6 to the hydrostatic transmission 7 and then from the hydrostatic transmission 7 into the transmission case 8. A seat 9 is positioned above the rear of the vehicle frame. As is conventional, the vehicle has a steering wheel 10 connected to the front wheels.

The tractor shown is constructed as a four-wheeled tractor which may be driven by the rear wheels or all four wheels, as required. For driving the rear wheels 2, left and right wheel shafts 12 are supported by left and right axle housings 11 fixed to the left and right sides of the transmission case 8 so that torque is transmitted from the inside of the case 8 directly to the left and right rear wheels 2. To drive the front wheels, a transmission shaft 16 having at its ends universal joints 14 and 15, transmits power from a lower portion of the inside of transmission case 8 into a front axle case 13. This transmision shaft 16 is driven by engaging a clutch arranged within the case 8. A rear PTO shaft 17 extends backwardly from the transmission case 8 and can be used for driving a working implement connected to the rear of vehicle, so as to be drawn by the vehicle. A front PTO shaft 19 which transmits power to a gear box Ma for the mower M, extends forwardly from the lower part of the transmission case 8, through a transmission shaft 18 having universal joints at both ends.

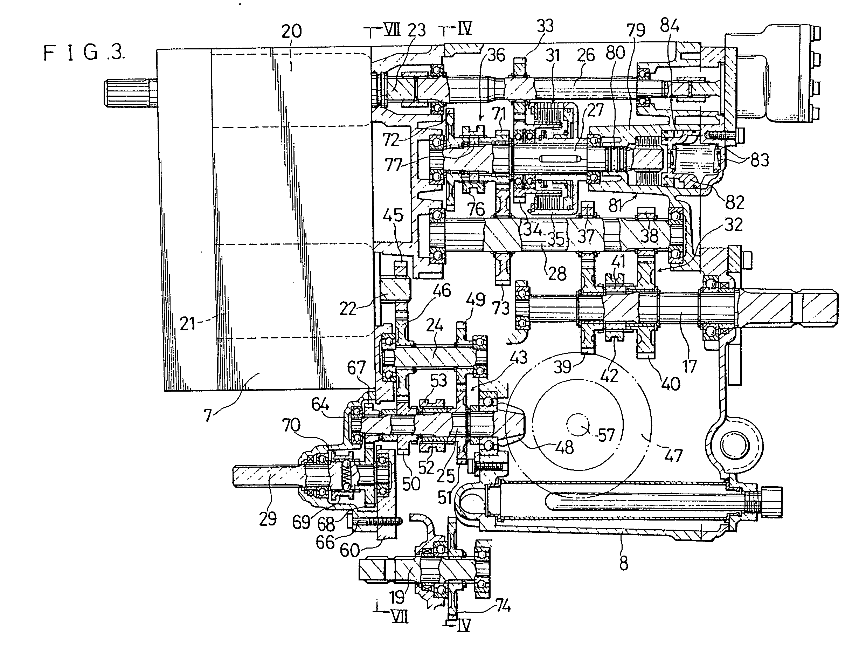

As shown in Fig. 3 the hydrostatic transmission 7 comprises a hydraulic pump 20 of the variable displacement type and a hydraulic motor 21 of the fixed displacement type which are arranged in parallel by placing the pump 20 above the motor 21.

Power for driving the vehicle wheels l, 2 is taken from the motor shaft 21, whereas power for driving the auxiliary equipment is taken from the pump shaft 20. To this end, the shaft 22 of the motor 21 drives into the transmission case 8 via a first input shaft 22, whereas the shaft of the pump 20 is extended on the opposite side of the pump to form a second input shaft 23 in the case 8. The first and second input shafts 22 and 23 are thus arranged parallel to each other with the second input shaft 23 above the first input shaft 21.

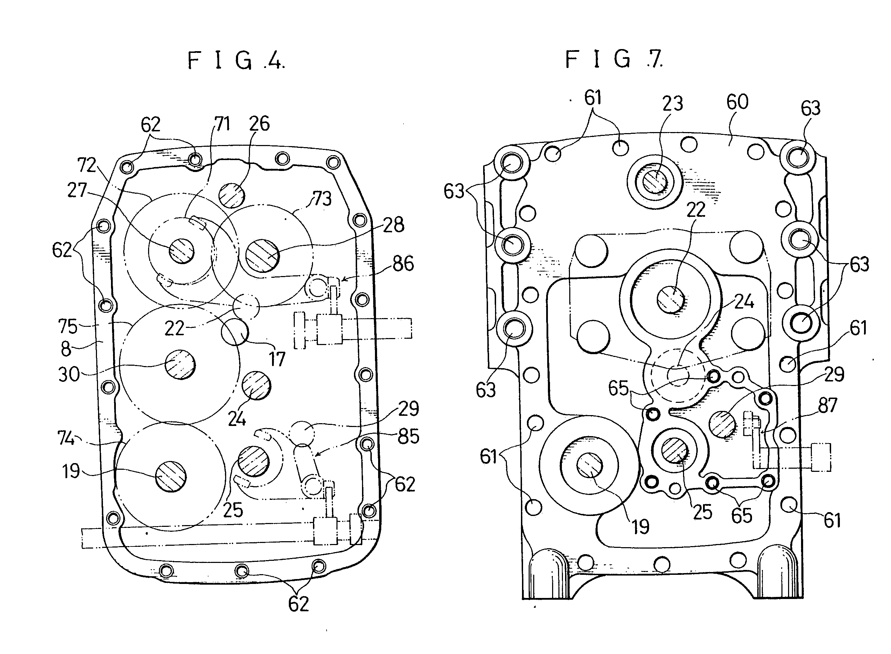

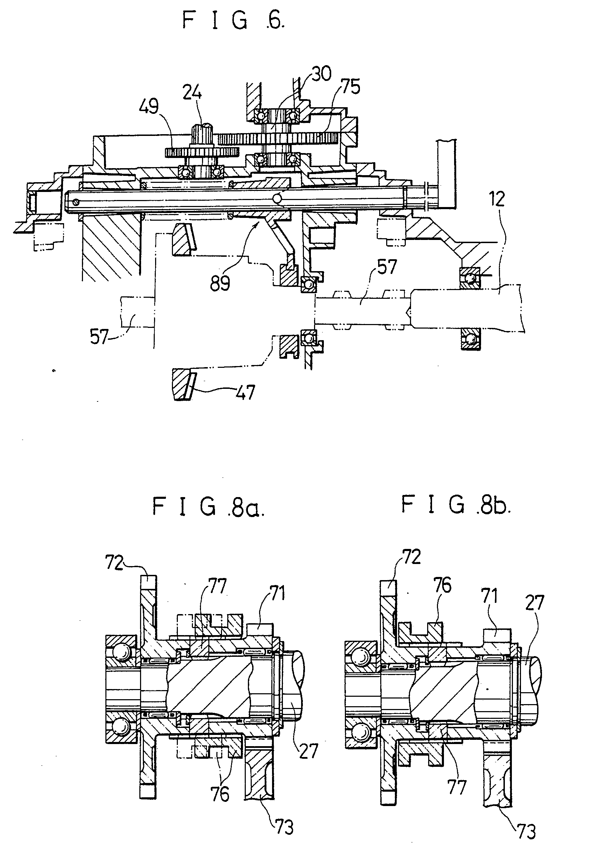

As shown in Figs. 3 and 4, the transmission case 8 includes, for vehicle drive power, an intermediate shaft 24 and change speed shaft 25 and, for working implement driving power, a transmission shaft 26, clutch shaft 27 and intermediate shaft 28. These shafts 24 to 28 are parallel to each other. Each of the shafts 26, 27 and 28 in the PTO transmission line is relatively long such that it occupies almost all of the length of the inside of transmission case 8, whereas each of the shafts 24 and 25 in the vehicle drive transmission line is shorter and occupies only a forward location in the inside of transmission case 8. The rear PTO shaft 17 extends from near the rear ends of the shafts 24 and 25 to a position outside the case 8. The front PTO shaft 19 has a length approximately equal to that of each of the shafts 24 and 25 and is disposed laterally of and somewhat below these shafts. The transmission case 8 further includes a short output shaft 29 for transmitting front wheel drive power, the output shaft 29 being arranged in the front portion of the case 8 and connected to the aforesaid transmission shaft 16, shown in Figs. l and 2, as well as an idler shaft 30, as shown in Fig. 6, which is incorporated in the PTO transmission line. The relative positions of the shafts referred to above can be seen in Fig. 4.

Within the transmission case 8, a PTO clutch 31 and PTO change speed mechanism 32, shown in Fig. 3, are arranged between the second input shaft 23 and rear PTO shaft 17. The PTO clutch 31 is a fluid operated clutch having a plurality of frictional elements slidably but non-rotatably mounted on a gear 34 which is rotatably mounted on the shaft 27, the elements co-operating with a complementary set of elements mounted on the clutch housing 35 fixedly mounted on the shaft 27. Gear 34 meshes with a gear 33 fixedly mounted on the transmission shaft 26 which is fixedly connected to the second input shaft 23. In front of the PTO clutch 31, there is, on the clutch shaft 27, a PTO selecting clutch 36 through which the intermediate shaft 28 is driven by the clutch shaft 27 as will be detailed later. The PTO change speed mechanism 32 is designed to connect the rear PTO shaft 17 to the intermediate shaft 28 with a choice of two speed ratios. To this end, the mechanism 32 comprises a pair of change speed gear trains which each comprise two gears, namely 37 and 38, fixedly mounted on the intermediate shaft 28, and 39 and 40 rotatably mounted on the rear PTO shaft 17 and meshed with the gears 37 and 38 respectively. On a splined collar 41, which is fixedly mounted on the rear PTO shaft 17 by a splined connection, is mounted a change speed sleeve 42 which connects one of the gears 39 and 40 selectively to the rear PTO shaft 17. The PTO clutch mechanism comprising the PTO clutch 31 and PTO selecting clutch 36 is disposed just in front of the front gear 37 of the PTO change speed mechanism 32.

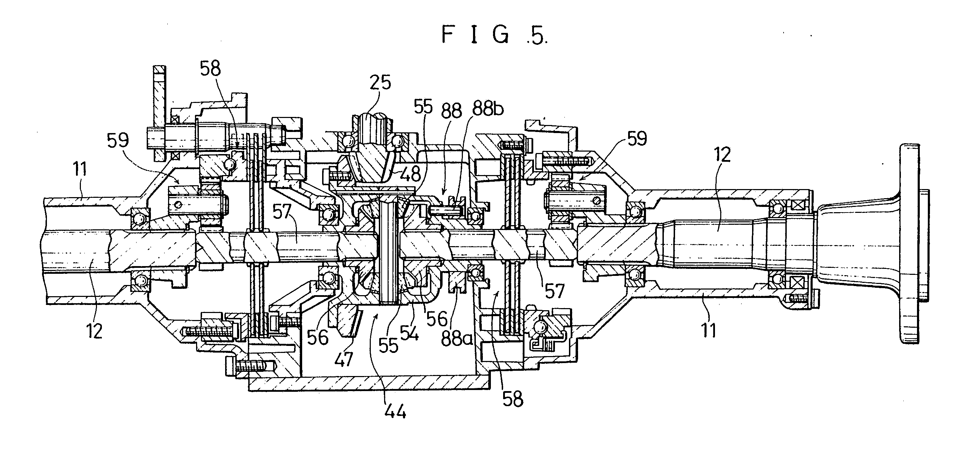

Within the transmission case 8 and below the PTO clutch mechanism 31, 36 and change-speed mechanism 32, which are located in the upper portion of the transmission case 8, are located a change speed gearing 43 (shown in Fig. 3) and a differential gearing 44 (shown in Fig. 5). The change speed gearing 43, which is arranged below the PTO clutch mechanism 31, 36 as shown in Fig. 3, serves to drive, with two alternative ratios, the shaft 25 from the intermediate shaft 24. The shaft 25 carries, at its rear end, a bevel pinion 48 which is meshed with a large bevel crown wheel 47. The shaft 24 is driven by the first input shaft 22 through a gear train having mutually meshing gears 45 and 46. To this end, a further gear 49, fixedly mounted on the intermediate shaft 24, and the gear 46 mesh with gears 51 and 50 respectively which are notatably mounted on the change speed shaft 25. On the change speed shaft 25 is further mounted, via a splined collar 52 between gears 50 and 51, a speed changing sleeve 53 which connects one of the gears 50 and 51 selectively to the change-speed shaft 25.

The differential gearing 44, which is arranged below the PTO change speed mechanism 32, is constructed in a conventional fashion such that, as shown in Fig. 5, a pair of driving pinions 55 and a pair of driven pinions 56 are meshed with one another within a differential casing 54 which is rotatably supported by the transmission case 8 and to which the input bevel gear 47 is fixedly attached. The left and right rear wheel shafts 12 are arranged coaxially with left and right output shafts 57. Within each of the left and right axle housings 11 are arranged a disc brake 58 for selectively braking each output shaft 57 and planetary reduction gearing 59 for connecting each wheel shaft 12 to output shaft 57.

As shown in Fig. 3, a frame plate 60, the front view of which is shown in Fig. 7, is fixedly secured to the front of the transmission case 8 by means of fastening bolts (not shown) which are engaged inthreaded bores 62 shown in Fig. 4 through holes 61 shown in Fig. 7. As shown in Fig. 7, the frame plate 60 has threaded bores 63 in its upper half which are used for fastening the hydrostatic transmission 7. As can be understood from Figs. 4 and 7, the output shaft 29 and front PTO shaft 19 are arranged at low levels, below the hydrostatic transmission 7 within the transmission case 8 on either side of the change speed shaft 25.

As shown in Fig. 3 the rear end of change speed shaft 25 is supported by a supporting wall extending from an inner wall of transmission case 8 and the rear end of the output shaft 29 for the front wheel-drive is supported by the frame plate 60. A cover 64 which supports the front ends of these shafts 25 and 29 is secured to the front of the frame plate 60 by means of bolts 66 which are fitted into threaded bores 65 shown in Fig. 7. Within this cover 64, gear 67, fixedly mounted on change-speed shaft 25, meshes with gear 68 which is itself rotatably mounted on output shaft 29 and can be connected selectively to the shaft 29 by a shiftable clutch sleeve 69 on shaft 29. Thus, a front wheel engaging clutch 70 is provided which selectively connects the output shaft 29 to the change-speed shaft 25.

Meanwhile, the front PTO shaft 19, which is disposed to one side of the output shaft 29 across the transmission case 8, can be driven from the second input shaft 23 as follows: as shown in Fig. 3, the PTO selecting clutch 36 comprises a pair of spaced first and second gears 72 and 71 which are rotatably mounted on the clutch shaft 27 in front of the PTO clutch 31. The second gear 71 meshes with a gear 73 which is fixedly mounted on the intermediate shaft 28, whereas the first gear 72, which is arranged forward of the second gear, meshes, as shown in Figs. 4 and 7, with a gear 75 which is mounted on the idler shaft 30 and in turn meshes with a gear 74 fixedly mounted on the front PTO shaft 29. On the clutch shaft 27 is further mounted a change speed clutch sleeve 76 which is slidably but non-rotatably supported by the shaft 27 via a splined collar 77 disposed between the first and second gears 72, 71. The boss of each of the gears 71 and 72 has an extension abutting the collar 77. Such extensions of the bosses and the splined collar 77 are formed with axially aligned teeth to which teeth, formed on the inner peripheral surface of clutch sleeve 76, may be engaged. The clutch sleeve 76 is designed so that it may be shifted selectively to a position shown in Fig. 3 and depicted by broken lines in Fig. 8a, where teeth on the sleeve 76 engage with teeth on the splined collar 77 as well as with teeth of both of the gears 71, 72, so that both of the first and second gears 72 and 71 are connected to the clutch shaft 27; another position is shown in Fig. 8a where teeth of the sleeve 76 engage with teeth on the splined collar 77 and second gear 71 so that only the second gear 71 is connected to the clutch shaft 27; a further position is shown in Fig. 8b where the sleeve 76 is engaged with teeth of the splined collar 77 and first gear 72 so that only the first gear 72 is connected to the clutch shaft 27. Consequently, the PTO selecting clutch 36 connects the clutch shaft 27 selective to both of the rear PTO shaft 17 and front PTO shaft 19 with the clutch sleeve 76 in the position shown in Fig. 3, only to the rear PTO shaft 17 with the clutch sleeve 76 in the position shown in Fig. 8a, and only to the front PTO shaft 19 with the clutch sleeve 76 in the position shown in Fig. 8b. As shown in Fig. 4, the gear train consisting of the gears 72, 75 and 74 is disposed within the transmission case 8 on that side of the case 8 to which the front PTO shaft 19 is directed. As can now be understood, the front PTO shaft 19 is driven from the second input shaft 23 by means of a gear train having the arrangement set forth above and by means of the PTO clutch mechanism 31, 36.

For engagement, the PTO clutch 31 is supplied with clutch-operating fluid via a fluid duct (not shown) which is formed in the clutch shaft 27. As shown in Fig. 3, a rotary joint for passing such fluid from the rotating shaft 27 to a fixed fluid path is formed by sealingly covering an annular groove on the outer peripheral surface of the clutch shaft 27 so as to form an annular fluid chamber 80 by means of the inner peripheral surface of a sleeve 79 which is formed integrally with the rear wall of the transmission case 8, such that it projects inwardly into the case 8. A brake 81 is also provided on the clutch shaft 27 by using the sleeve 79 as a brake case therefor. This brake 81 is constructed such that pluralities of axial, frictional disc elements are slidably but nonrotatably supported respectively on the clutch shaft 27 and by the wall of the sleeve 79, a spring 83 bears on the frictional elements via piston 82 so as to cause frictional engagement between the respective pluralities of disc elements. An annular fluid chamber 84 houses the piston 82. The fluid chamber 84 is connected with a fluid path for supplying and draining clutch-operating fluid from the PTO clutch 31. Hence, the brake 81 on the clutch shaft 27 is disengaged when the clutch 31 is engaged, i.e. when fluid is supplied under pressure into the annular fluid chamber 84, resulting in the retraction of the piston 82, whereas the brake 81 is operated so as to brake the clutch shaft 27 with the clutch 31 in the non-operated state, i.e. when fluid is drained from the chamber 84, resulting in an advance of the piston 82 by means of the biasing force of the spring 83.

In Fig. 4, numerals 85 and 86 designate operating mechanisms for the change speed gearing 43 and for the PTO exchanging clutch 36 respectively. In Fig. 7, numeral 87 designates an operating mechanism for the front wheel drive engaging clutch 70. As shown in Fig. 5, a lock-up clutch 88 enables the differential gearing 44 to be locked for selectively disengaging the differential gearing 44. This clutch 88 comprises a shiftable clutch sleeve 88a which is slidably mounted on the boss of differential casing 54 and is selectively shifted by means of an operating mechanism 89, shown in Fig. 6, so that a pin 88b attached to the sleeve 88a is engaged with its corresponding driven pinion 56 so as to connect the latter non rotatably to the differential casing 54.

The vehicle shown can be used for various purposes such as reaping and earth-moving. In such uses, the vehicle travels at a continuously variable speed controlled by the hydrostatic transmission which also has a selectable reverse direction and, by means of the change-speed gearing 43 a step change of speed. When required, the front wheels 1 are also driven by engaging the front wheel engaging clutch 70. By using the PTO selecting clutch 36, either the rear PTO shaft 17, the front PTO shaft 19 or both of them may be driven so as to drive either of the mower M shown in Fig. I and/or some other working implement such as rotary tiller or mower connected to and drawn by the vehicle. Additionally, auxiliary equipment drawn by the vehicle may be driven at a high speed or at a low speed by using the PTO change speed mechanism 32. Before the mechanically operated PTO selecting clutch 36 or PTO change speed mechanism 32 is engaged, the fluid-operated PTO clutch 31 is disengaged by operating a control valve not shown in the drawings. The brake 81 is thereby automatically applied to brake the clutch shaft 27 so that inertial rotation of the shaft is arrested. The spring 83 for actuating the brake 81 is preset to have a relatively small biasing force such that it does not prevent the shifting of the shifting sleeve 42 or shiftable clutch sleeve 76. The brake 81 is also applied when the PTO clutch 31 is disengaged to prevent an unexpected transmission of power from the transmission shaft 26 to the clutch shaft 27 which might be caused by the drag of the lubricant within the clutch 31.

**Claims**

1. A power transmission system for a motor vehicle having a hydrostatic transmission (7), mounted on the front of a transmission case (8) and consisting of a hydraulic pump (20) and a hydraulic motor (21) located below the hydraulic pump (20), the shaft (23) of the hydraulic motor (21) is drivably connected to a rear wheel drive assembly by means of a first gear train (45, 46) and first change speed gearing (43), the pump shaft (23) of the hydraulic pump (20) is extended rearwardly and drivably connectable, by means of a second gear train (71, 73) and second change speed gearing (32), to a rearwardly extending rear power take-off shaft (17) and, by means of a third gear train (72, 74, 75), to a forwardly extending front power take-off shaft (19), characterised in that the rear wheel drive assembly (44) is mounted in a lower portion of the transmission case (8), and the first gear train (45, 46) and first change speed gearing (43) are located below the level of the hydraulic motor shaft (22), in front of the rear wheel drive assembly (57); the second gear train (71, 73), second change speed gearing (32) and rear power takeoff shaft (17) are located in an upper portion of the transmission case, above the rear wheel assembly (44); and the third gear train (72, 74, 75) and second power take-off shaft (19) are located forwardly of the rear wheel drive assembly, to one side of the first change speed gearing (43).

2. A transmission system as claimed in claim 1, characterised in that a clutch mechanism (31, 36) comprises first and second clutches mounted on a common clutch shaft (27) above the rear wheel drive assembly (44), the first clutch (31) controlling the engagement of the power take-off transmission path and the second clutch controlling the selection of the power take-off shafts (17, 19) such that either one or both of the power take-off shafts (17, 19) is engageable at a time.

3. A transmission system as claimed in claim 2, characterised in that the clutch shaft (27) is mounted to one side of an intermediate shaft (28) on which are fixedly mounted gears (39, 40) of the second change speed gearing (32) and gear wheel (73) of the second gear train (71, 73).

4. A transmission system as claimed in claim 3, characterised in that the clutch shaft (27) is mounted at substantially the level of the intermediate shaft (28).

5. A transmission system as claimed in any of the preceding claims, characterised in that a front wheel drive shaft (29), extending forwardly from the transmission case (8), to one side of the second power take-off shaft (19), is drivably connected with the output shaft (25) of first change speed gearing (43) by means of a fourth gear train (67, 68).

6. A transmission system as claimed in claim 5, characterised in that the front wheel driveshaft (29) is engageable by means of a clutch (70) on the driveshaft (29).

**Patentansprüche**

1. Kraftübertragungssystem für ein Motorfahrzeug mit einem hydrostatischen Getriebe (7), das an der Stirnseite eines Getriebegehäuses (8) angebracht ist und aus einer Hydraulikpumpe (20) und aus einem Hydraulikmotor (21) besteht, der unterhalb der Hydraulikpumpe (20) liegt und dessen Welle (23) durch einen ersten Getriebzug (45, 46) und einen ersten Wechselgetrieberadsatz (43) mit den Hinterrädern antriebsmäßig verbunden ist, während die Welle (23) der Hydraulikpumpe (20) sich rückwärtig erstreckt und über einen zweiten Getriebezug (71, 73) und einen zweiten Wechselgetrieberadsatz (32) mit einer sich rückwärts erstreckenden(rückwärtigen)Zapfwelle (17) und über einen dritten Getriebezug (72, 74, 75) mit einer sich nach vorn erstreckenden (vorderen) Zapfwelle (19) antriebsmäßig verbindbar ist, dadurch gekennzeichnet, daß der Hinterradantrieb (44) in einem tieferen Teil des Getriebegehäuses (8), der erste Getriebezug (45, 46) und der erste Wechselgetrieberadsatz (43) unter dem Niveau der Hydraulikmotorwelle (22) und vor dem Hinterradantrieb (44) angeordnet sind; der zweite Getriebezug (71, 73), der zweite Wechselgetrieberadsatz (32) und die rückwärtige Zapfwelle (17) in einem höheren Teil des Getriebegehäuses (8) oberhalb des Hinterradantriebes (44) angeordnet sind; und der dritte Getriebezug (72, 74, 75) und die zweite Zapfwelle (19) vor dem Hinterradantrieb an einer Seite des ersten Wechselgetrieberadsatzes (43) angeordnet sind.

2. Kraftübertragungssystem nach Anspruch 1, dadurch gekennzeichnet, daß eine Kupplungsanordnung (31, 36) erste und zweite, auf einer gemeinsamen Kupplungswelle (27) oberhalb des Hinterradantriebes (44) angeordnete Kupplungen umfaßt, wobei die erste Kupplung (31) dazu dient, den Eingriff in den Zapfwellenbetrieb zu ermöglichen, während die zweite Kupplung (36) zur Auswahl der beiden Zapfwellen (17, 19) in der Weise dient, daß nur eine oder beide Zapfwellen (17, 19) gleichzeitig in Eingriff sind.

3. Kraftübertragungssystem nach Anspruch 2, dadurch gekennzeichnet, daß die Kupplungswelle (27) an einer Seite einer Zwischenwelle (28) angeordnet ist, auf welcher Zahnräder (39, 40) des zweiten Wechselgetrieberadsatzes (32) und das Zahnrad (73) des zweiten Getriebezuges (71, 73) befestigt sind.

4. Kraftübertragungssystem nach Anspruch 3, dadurch gekennzeichnet, daß die Kupplungswelle (27) im wesentlichen auf dem Niveau der Zwischenwelle (28) angeordnet ist.

5. Kraftübertragungssystem nach einem der vorangehenden Ansprüche, dadurch gekennzeichnet, daß eine Vorderradantriebswelle (29), die sich von dem Getriebegehäuse (8) an einer Seite der zweiten Zapfwelle (19) nach vorn erstreckt, mit der Antriebswelle (25) des ersten Wechselgetrieberadsatzes (43) über einen vierten Getriebezug (67, 68) antriebsmäßig verbunden ist.

6. Kraftübertragungssystem nach Anspruch 5, dadurch gekennzeichnet, daß die Vorderradantriebswelle (29) über eine auf ihr einrückbar angeordnete Kupplung (70) antreibbar ist.

**Revendications**

1. Système de transmission d'énergie pour un véhicule à moteur ayant une transmission hydrostatique (7) montée sur l'avant d'un boîtier de transmission (8) et constituée par une pompe hydraulique (20) et un moteur hydraulique (21) situé en dessous de la pompe hydraulique (20), l'arbre (23) du moteur hydraulique (21) étant en liaison d'entraînement avec un ensemble d'entraînement de roues arrière au moyen d'un premier train d'engrenages (45, 46) et d'un premier mécanisme d'engrenage de changement de vitesse (43), l'arbre de pompe (23) de la pompe hydraulique (20) étant prolongé vers l'arrière et

pouvant être mis en liaison d'entraînement, au moyen d'un deuxième train d'engrenages (71, 73) et d'un deuxiéme mécanisme d'engrenage de changement de vitesse (32), avec un arbre de prise de force arrière (17) s'étendant vers l'arriére et, au moyen d'un troisième train d'engrenages (72, 74, 75), avec un arbre de prise de force avant (19) s'étendant vers l'avant, caractérisé en ce que l'ensemble (44) d'entraînement des roues arrière est monté dans une partie inférieure du boîtier de transmission (8) et le premier train d'engrenages (45, 46) et le premier mécanisme d'engrenage de changement de vitesse (43) sont situés en dessous du niveau de l'arbre (22) du moteur hydraulique, devant l'ensemble (57) d'entraînement des roues arrière; le deuxième train d'engrenages (71, 73), le deuxième mécanisme d'engrenage de changement de vitesse (32) et l'arbre de prise de force arrière (17) sont situés dans une partie supérieure du boîtier de transmission, au-dessus de l'ensemble (44) d'entraînement des roues arrière; et le troisième train d'engrenages (72, 74, 75) et le deuxième arbre (19) de prise de force sont situés en avant de l'ensemble d'entraînement des roues arrière, d'un côté du premier mécanisme d'engrenage de changement de vitesse (43).

2. Système de transmission selon revendication 1, caractérisé en ce qu'un mécanisme d'embrayage (31, 36) comprend un premier et un deuxième embrayage qui sont montés sur un arbre d'embrayage commun (27) au-dessus de l'ensemble (44) d'entraînement des roues arrière, le premier embrayage (31) commandant la mise en condition d'engagement de la chaine cinématique de transmission aux prises de force et le deuxième embrayage commandant la sélection des arbres de prise de force (17, 19) de façon à permettre à tout moment la mise en condition d'engagement de l'un et/ou l'autre des arbres de prise de force (17, 19).

3. Système de transmission selon revendication 2, caractérisé en ce que l'arbre d'embrayage (27) est monté d'un côté d'un arbre intermédiaire (28) sur lequel sont montés fixes des engrenages (39, 40) du deuxième mécanisme d'engrenage de changement de vitesse (32) et la roue d'engrenage (73) du deuxième train d'engrenages (71, 73).

4. Système de transmission selon revendication 3, caractérisé en ce que l'arbre d'embrayage (27) est monté sensiblement au niveau de l'arbre intermédiaire (28).

5. Système de transmission selon l'une quelconque des revendications précédentes, caractérisé en ce qu'un arbre (29) d'entraînement des roues avant, s'étendant vers l'avant depuis le boîtier de transmission (8), d'un côté du deuxième arbre de prise de force (19), est en liaison d'entraînement avec l'arbre de sortie (25) du premier mécanisme d'engrenage de changement de vitesse (43), au moyen d'un quatrième train d'engrenage (67, 68).

6. Système de transmission selon revendication 5, caractérisé en ce que l'arbre (29) d'entraînement des roues avant peut être mis en condition d'engagement au moyen d'un embrayage (70) sur l'arbre d'entraînement (29).

FIG .1.

FIG .2.

1

FIG. 3.

F I G .4.

F I G .7.

0 153 196

# F I G .5.

# F I G .6.

# F I G .8a.

# F I G .8b.